# EUROPEAN PATENT SPECIFICATION

(11) **EP 1 125 718 B1**
(45) Date of publication and mention of the grant of the patent: **31.03.2004**
(21) Application number: 01300838.8
(22) Date of filing: 31.01.2001
(51) Int. Cl.: B29C 55/06, B29C 55/04, B29C 55/18

(54) **Stretch wrap film**
Spannwickelfilm
Film d'emballage étirable

(30) Priority: 09.02.2000 EP 00300989
(43) Date of publication of application: 22.08.2001
(73) Proprietor: ITW MIMA FILMS LLC, Glenview, Illinois 60025 (US)
(72) Inventor: Gennesson, Patrick, 07100 Boulieu-les-Annonay (FR)
(74) Representative: Jones, Helen Marjorie Meredith

(56) References cited:
- EP-A- 0 806 284
- WO-A-89/06594
- WO-A-98/50219
- WO-A-99/65775
- US-A- 3 076 232

## Description

Stretch wrap films are used extensively in packaging to package discrete units together to form a unitary package and are also frequently used to attach a package to a palette, for example. Stretch wrap film may also be used as wrapping to protect a commodity from the environment during handling and transport.

Stretch wrap may be applied by an automatic or semi-automatic machine which includes stretch rollers to pre-stretch the film before it is wrapped around a package. Alternatively the stretch wrap may be applied manually by applying the film from a roll supported on a simple handheld mandrel. The present application has particular application to this latter category of stretch wrap material, and also to film for use on machines in which the amount of stretch prior to wrapping is low or zero

EP-A-0531021 describes a process for producing a stretch wrap plastic film in which the film is "cold stretched" at ambient temperatures to thereby plastically and elastically stretch the film to cold orient it The cold oriented film is then allowed to relax to recover substantially its elastic deformation before being formed into a roll. This arrangement provides a film wrap which is substantially as economical, and may be more economical, in film usage when applied by a hand wrapping device than other stretch wrapping films are when applied by automatic and semi-automatic machinery including power pre-stretching devices- The process described in this patent specification has been commercially successful but, in practice, it has not been possible to achieve consistently as high a stretch ratio as 1:4 suggested in the patent specification without experiencing difficulties due to film breakage.

PCT Application WO 99/65775 discloses a stretch wrapping system for stretch wrap plastic films, in particular linear low density polyethylene (LLDPE). This process is, however, a cold stretching process. US 3,076,232 discloses a method of making a plastic stretched film comprising the step of taking a cast or blown film of polyethylene at a temperature of between 50°C and 100°C, stretching it in two successive stretching steps, the first step having a higher stretch ratio than that of the second to step, to cause both plastic and elastic deformation of the film, relaxing the stretched film substantially to release all of the elastic deformation and winding the substantially relaxed film into rolls. This process is for stretching polyethylene and is designed to prevent dimensional instability after stretching. The stretching ratios used would not yield a uniformly stretched film with the properties described in this specification.

According to this invention a method of making a plastics stretch film comprises the steps of taking a cast or blown film at a temperature of between 50°C and 100°C, stretching it in two successive stretching steps, the first step having a stretch ratio higher than that of the second step, to cause both plastic and elastic deformation of the film, relaxing the stretched film substantially to release all of the elastic deformation and winding the substantially relaxed film into rolls characterized in that:
the stretch ratio of the first stretching step is in the range 1:1.85 to 1:1.95; the stretch ratio of the second stretching step is in the range 1:1.70 to 1:1.80; and the stretch film is linear low density polyethylene (LLDPE).

. Preferably, stretching is performed at a temperature of between 75°C and 90°C.

By having a film in the temperature range specified above and stretching it in two successive stages is has been found that it is possible to produce more consistently a pre-stretched film. The film also has advantages in having a clearer, less opaque appearance.

Preferably during the relaxing step there is a reduction ratio of substantially 1:0.85 between the speed of the film during the second stretch rolling step and the speed of the film during wind-up.

Preferably the temperature of the stretch film is substantially 80°C during the stretching steps. The plastics film may be at this temperature by carrying out the stretching steps at an appropriate position downstream of a casting or blowing/extrusion production line so that the method in accordance with the present invention is carried out in line with the film production. Preferably however the method of the present invention is carried out of line with the basic film production process and, in this case, the film is preferably re-heated, for example by being passed over one or more heated rollers immediately before the stretching steps.

The plastics material for the stretch film of the present invention comprises linear low density polyethylene (LLDPE). This material is a copolymer of ethylene with a C₄ to C₁₀ olefin; for example, butene-1, 3-methyl-butene-1, hexene-1, 3-methyl-pentene-1, 4-methylpentene-1, 3-methyl-hexene-1, octene-1, decene-1 or a mixture thereof. The alpha-olefin is usually present in an amount from 1 to 10 weight percent of the copolymer. A typical manufacturing process for the formation thereof is disclosed in US-A-4076698 and 4205021. The preferred LLDPE has a density ranging from 0.900 to 0.940 g/cm³. This material preferably has a melt index of from 1 to 6. A multilayer film is also suitable, such as a multilayer film having a three layer A-B-C structure wherein the A layer comprises LVLDPE, the B layer comprises metallocene LLDPE and the C layer comprises LMDPE.

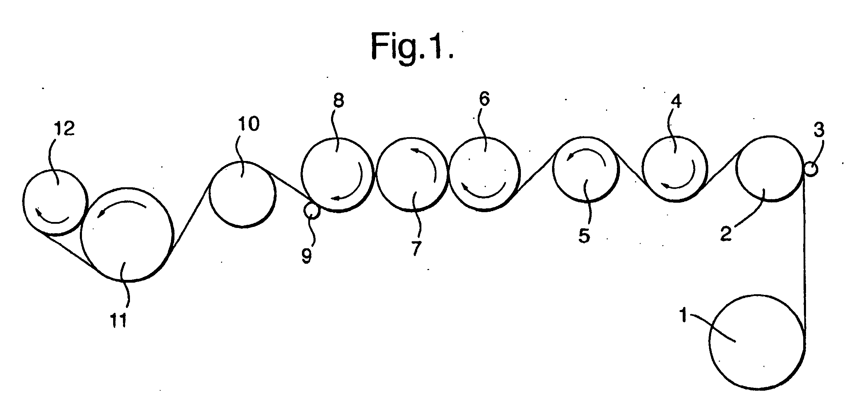

A particular example of a process in accordance with this invention will now be described with reference to the accompanying drawing which is a diagrammatic illustration of the process.

A plastics stretch film of 17, 20 or 23 µm thick material consisting of 100% LLDPE sold under the trade description 17, 20 or 23 UP 050 by Mima Films s.c.a. of 148 Route d'Arlon, L-8010 Strassen, Luxembourg is taken from a feed roll 1 through a nip formed between a first heater roller 2 and an idle roller 3. The film then passes around the top of heater roller 2 around the bottom of a heater roller 4 and around the top of a heater roller 5. All three heater rolls 2, 4 and 5 are provided with a recirculating supply of oil heated to 80°C. Heater rollers 4 and 5 are driven in opposite senses at a peripheral speed of 65 metres per minute. The heater roller 2 idles. As the film passes over the heater rollers 2, 4, and 5 it is heated to a temperature of 80°C. The heater rollers are formed from a material having a high heat conductivity. Chrome rollers have been found to be particularly effective.

The heated film then passes beneath a first rubber covered stretch roller 6 which has a peripheral speed of 66 metres per minute. A second rubber covered stretch roller 7 is located very close to stretch roller 6, 1 mm or less, and is driven in the opposite sense to the first stretch roller 6 at a peripheral speed of 126 metres per minute. This stretches the film with a stretch ratio of 1:1.91, or 91% stretch. A third stretch roller 8 which is again located physically close to stretch roller 7 at a spacing of 1 mm or less is driven in the same sense as the first stretch roller 6 at a peripheral speed of 217 metres per minute. This stretches the film with a further stretch ratio of 1:1.72 or 72% stretch. An idler roller 9 creates a nip with the third stretch roller 8 to prevent slippage of the plastics film. As the film passes between the stretch rollers 6 and 7 and stretch rollers 7 and 8 it is stretched in two steps with a total stretch ratio of 1:3.3 or a stretch of 230%. The close proximity of the stretch rollers 6 and 7 and 7 and 8 prevent substantial necking-down of the plastics film material during its stretching.

The film leaving the nip between the third stretch roller 8 and the idler roller 9 then passes over a third idler roller 10 before passing around the surface of a polished roller 11 which has a peripheral surface moving in the opposite direction to the direction of movement of the film, before being wound on a core to provide an output roll 12 driven by being pressed against the surface of the roller 11. The roller 11 has a peripheral speed of 185 metres per minute and thus there is a difference ratio of 1:0.85 between the peripheral speed of the third stretch roller 8 and that of the wind up roller 12 which is sufficient to allow substantial relaxation of the film before it is wound up. Thus, the plastics film from the feed roller 1 is subjected to a total stretch of 1:3.3 followed by a relaxation of 1:0.85 leading to a total stretch ratio of 1:2.85. The typical thickness of the stretched output material is 6.8, 8 or 9 µm.

## Claims

1. A method of making a plastics stretch film comprising the steps of taking a cast or blown film at a temperature of between 50°C and 100°C, stretching it in two successive stretching steps, the first step having a stretch ratio higher than that of the second step, to cause both plastic and elastic deformation of the film, relaxing the stretched film substantially to release all of the elastic deformation and winding the substantially relaxed film into rolls **characterized in that**:
the stretch ratio of the first stretching step is in the range 1:1.85 to 1:1.95;
the stretch ratio of the second stretching step is in the range 1:1.70 to 1:1.80;
and the plastics material of the stretch film comprises linear low density polyethylene (LLDPE).

2. A method of making a plastics stretch film according to claim 1, wherein stretching is performed at a temperature of between 75°C and 90°C.

3. A method of making a plastics stretch film according to any one of the preceding claims, wherein during the relaxing step there is a reduction ratio of substantially 1:0.85 between the speed of the film during the second stretch rolling step and the speed of the film during wind-up.

4. A method of making a plastics stretch film according to any one of the preceding claims, wherein the temperature of the stretch film is substantially 80°C during the stretching steps.

5. A method of making a plastics stretch film according to any one of the preceding claims, wherein the film is re-heated by being passed over one or more heated rollers immediately before the stretching steps.

## Patentansprüche

1. Verfahren zur Herstellung einer Kunststoffspannfolie enthaltend die Schritte des Aufnehmens einer gegossenen oder geblasenen Folie bei einer Temperatur zwischen 50°C und 100°C, Strecken der Folie in zwei aufeinander folgenden Streckschritten, wobei der erste Schritt ein Streckverhältnis hat, welches höher ist als das des zweiten Schrittes, um eine plastische und elastische Deformation der Folie zu bewirken, Entspannen der gestreckten Folie im wesentlichen um die ganze elastische Deformation freizusetzen, und Wickeln der im wesentlichen entspannten Folie auf Rollen,
**dadurch gekennzeichnet, dass**
das Streckverhältnis des ersten Streckschrittes im Bereich von 1:1,85 bis 1:1,95 liegt, das Streckverhältnis des zweiten Streckschrittes im Bereich von 1:1,70 bis 1:1,80 liegt, und das Kunststoffmaterial der Spannfolie lineares Niederdruck-Polyethylen (LLDPE) enthält.

2. Verfahren zur Herstellung einer Kunststoffspannfolie nach Anspruch 1, wobei das Strecken bei einer Temperatur zwischen 75°C und 90°C durchgeführt wird.

3. Verfahren zur Herstellung einer Kunststoffspannfolie nach irgendeinem der vorhergehenden Ansprüche, wobei es während des Entspannungsschrittes ein Reduktionsverhältnis von im wesentlichen 1:0,85 zwischen der Geschwindigkeit der Folie während des zweiten Streckrollschrittes und der Geschwindigkeit der Folie während des Aufwickelns gibt.

4. Verfahren zur Herstellung einer Kunststoffspannfolie nach irgendeinem der vorhergehenden Ansprüche, wobei die Temperatur der Spannfolie während den Streckschritten im wesentlichen 80°C beträgt.

5. Verfahren zur Herstellung einer Kunststoffspannfolie nach irgendeinem der vorhergehenden Ansprüche, wobei die Folie wiedererhitzt wird indem sie unmittelbar vor den Streckschritten über eine oder mehrere erhitzte Rollen geleitet wird.

## Revendications

1. Procédé de fabrication d'un film de plastique étirable, comprenant les étapes de prise d'un film coulé ou soufflé ayant une température comprise entre 50 °C et 100 °C, d'étirage de celui-ci en deux étapes successives, la première étape ayant un rapport d'étirage supérieur à celui de la deuxième étape, pour produire une déformation à la fois plastique et élastique du film, de quasi relaxation du film étiré pour supprimer la totalité de la déformation élastique, et d'enroulement en rouleaux du film pratiquement relaxé, **caractérisé par le fait que**
le rapport d'étirage de la première étape d'étirage est compris entre 1/1,85 et 1/1,95,
le rapport d'étirage de la deuxième étape d'étirage est compris entre 1/1,70 et 1/1,80, et
la matière plastique du film étirable est du polyéthylène linéaire basse densité.

2. Procédé de fabrication d'un film de plastique étirable selon la revendication 1, dans lequel l'étirage est effectué à une température comprise entre 75 °C et 90 °C.

3. Procédé de fabrication d'un film de plastique étirable selon l'une des revendications précédentes, dans lequel, pendant l'étape de relaxation, il y a un rapport de réduction de sensiblement 1/0,85 entre la vitesse du film pendant la deuxième étape d'étirage et la vitesse de celui-ci pendant l'enroulement.

4. Procédé de fabrication d'un film de plastique étirable selon l'une des revendications précédentes, dans lequel, pendant les étapes d'étirage, la température du film étirable est de sensiblement 80 °C.

5. Procédé de fabrication d'un film de plastique étirable selon l'une des revendications précédentes, dans lequel, immédiatement avant les étapes d'étirage, le film est réchauffé par passage sur un ou plusieurs rouleaux chauffés.
